**Europäisches Patentamt**

**European Patent Office**

**Office européen des brevets**

(19)

(11) Veröffentlichungsnummer: **0 271 765**
**B1**

(12) **EUROPÄISCHE PATENTSCHRIFT**

(45) Veröffentlichungstag der Patentschrift:
22.08.90

(51) Int. Cl.⁵: **F16K 31/40**

(21) Anmeldenummer: 87117782.0

(22) Anmeldetag: 02.12.87

(54) Eigenmediumgesteuertes, durch ein vorzugsweise elektromagnetisch betätigtes Steuerventil auslösbares Ventil.

(30) Priorität: 13.12.86 DE 3642669

(43) Veröffentlichungstag der Anmeldung:
22.06.88 Patentblatt 88/25

(45) Bekanntmachung des Hinweises auf die Patenterteilung:
22.08.90 Patentblatt 90/34

(84) Benannte Vertragsstaaten:
AT BE CH DE FR GB IT LI NL SE

(56) Entgegenhaltungen:
CH-A- 412 491
DE-B- 1 263 425
DE-C- 976 465
DE-U- 1 788 251
US-A- 4 105 186
US-A- 4 180 236

(73) Patentinhaber: A. und K. Müller GmbH & Co. KG,
Bücherstrasse 31-37, D-4000 Düsseldorf 13(DE)

(72) Erfinder: Moldenhauer, Hermann, Lüdenscheider
Strasse 2, D-4000 Düsseldorf 12(DE)

(74) Vertreter: Feder, Wolf-Dietrich et al, Dr. Wolf-D. Feder,
Dr. Heinz Feder Dipl.-Ing. P.-C. Sroka
Dominikanerstrasse 37, D-4000 Düsseldorf 11(DE)

## Beschreibung

Die Erfindung betrifft ein eigenmediumgesteuertes, durch ein vorzugsweise elektromagnetisch betätigtes Steuerventil auslösbares Ventil, mit einem im Ventilgehäuse bewegbar angeordneten, den Ventilteller tragenden Differentialkolben, an dessen einer Seite ein mit dem Ventilzufluß verbundener Druckraum angeordnet ist, der über einen, dem Ventilteller gegenüberliegenden Ventilsitz mit dem Ventilauslaß verbunden ist und an dessen anderer Seite ein Steuerraum angeordnet ist, der über eine mittig im Differentialkolben angeordnete, durch den Steuerventilteller verschließbare Entlastungsbohrung mit dem Ventilauslaß und über eine außermittig im Differentialkolben angeordnete Steuerbohrung mit dem Druckraum verbunden ist, wobei in die Steuerbohrung ein mit dem Ventilgehäuse fest verbundener Stift hineinragt.

Derartige servogesteuerte Ventile sind an sich bekannt.

So ist es beispielsweise bei einem derartigen in DE-C 976 465 beschriebenen Ventil bekannt, den in die Steuerbohrung hineinragenden Stift konisch auszubilden, so daß bei einer Bewegung des Differentialkolbens der Durchflußquerschnitt der Steuerbohrung verändert wird. Hiermit soll bei dem bekannten Ventil erreicht werden, daß die Schließbewegung des Ventils in der letzten Phase verzögert und damit das Auftreten eines Wasserschlages vermieden wird.

Es ist weiterhin in der DE-B 1 263 425 ein eigenmediumgesteuertes Ventil beschrieben, bei dem der Druckraum vom Steuerraum durch eine Membran getrennt ist, in der sich eine der Steuerbohrung entsprechende Durchtrittsöffnung befindet, in die ein an einen bewegbaren Abdeck teil angeordneter konischer Stift hineinragt. Auch bei diesem Ventil soll durch diese Einrichtung eine den Wasserschlag verhindernde Verzögerung der Schließbewegung erreicht werden. Weiterhin wird in dieser Druckschrift darauf hingewiesen, daß durch den in die Durchtrittsöffnung hineinragenden konischen Stift ein Verstopfen der Durchtrittsöffnung durch Verunreinigungen des Mediums verhindert wird, da der Stift bei seiner Bewegung innerhalb der Durchtrittsöffnung, außer der Bewegung in axialer Richtung, auch eine Bewegung in radialer Richtung ausführt und dadurch eine Reinigung der Öffnung vornimmt.

Eigenmediumgesteuerte Ventile der oben beschriebenen Bauart müssen vor allem, wenn sie am öffentlich Wassernetz betrieben werden, bestimmten Bedingungen hinsichtlich der Wirkungsweise genügen. So wird beispielsweise erwartet, daß in der Öffnungsphase kein unzulässiger Druckabfall vor dem Ventil zu messen ist. Für das Öffnen eines derartigen servogesteuerten Ventiles ist die Entlastungsbohrung von Wichtigkeit. Für die Schließphase wird vorausgesetzt, daß kein übermäßiger Druckstoß vor dem Ventil entsteht, welcher Rückwirkungen auf andere Armaturen und Installationen ausüben könnte.

Dies bedeutet, daß die für die Funktion wichtigen Steuer-und Entlastungsbohrungen in einem bestimmten Verhältnis zueinander stehen und entsprechend bemessen sein müssen, um die hier vorhandenen einschlägigen Vorschriften einhalten zu können.

Es hat sich nun gezeigt, daß bei Ventilen, deren Funktionsweise direkt nach ihrer Herstellung ordnungsgemäß mit Wasser überprüft wurde, nach einer längeren Lagerzeit bis zur Erstinbetriebnahme dadurch Probleme auftreten, daß sich die Steuerbohrung in ihrem Querschnitt verändert oder gar zugesetzt hat. Dies ist in erster Linie darauf zurückzuführen, daß sich im verbleibenden Prüfwasser Biomasse, beispielsweise in Form von Algen oder Schleimbakterien gebildet hat, welche die Steuerbohrung, die oft ein sehr kleines Verhältnis von Durchmesser zu Länge besitzt, verstopft.

Der Hersteller derartiger Ventile muß daher entsprechende Maßnahmen ergreifen, um diesen Effekt vorzubeugen.

Besonders gefährdet sind in dieser Hinsicht Ventile, bei denen der die Steuerbohrung aufweisende Differentialkolben aus Kunststoff besteht.

Ausgehend von dem oben beschriebenen an sich bekannten Grundgedanken der Reinigung einer Steuerbohrung während des Betriebes des Ventils bestand die der Erfindung zugrunde liegende Aufgabe darin, ein Ventil der eingangs beschriebenen Bauart so auszugestalten, daß mit einfachsten konstruktiven Mitteln auch bei Steuerbohrungen mit relativ kleinem Verhältnis von Durchmesser zu Länge ein Reinigungseffekt mit Sicherheit erreicht wird, wobei die Konstruktion vor allem für aus Kunststoffteilen aufgebaute Ventile gedacht sein sollte. Weiterhin sollte die angestrebte Lösung in einfachster Weise die Möglichkeit eröffnen, zusätzliche Anforderungen, die an derartige Ventile häufig gestellt werden, zu erfüllen.

Eine solche Forderung kann beispielsweise darin bestehen, daß sichergestellt werden soll, daß in inverser Richtung kein Wasser durch das Ventil strömen darf.

Eine weitere häufig gestellte Forderung besteht darin, daß bei einem aus Kunststoffteilen aufgebauten Magnetventil das berührbare Medium, also das Wasser, in die Schutzmaßnahme "Erdung" mit einbezogen sein muß. Dies ist bei einem Ventil mit den Merkmalen aus dem Oberbe griff des Patentanspruchs 1 besonders schwer zu erfüllen, da bei geschlossenem Ventil das im Druckraum befindliche Medium mit dem im Steuerraum befindlichen Medium nur über die mit Medium gefüllte Steuerbohrung verbunden ist, was einen relativ hohen elektrischen Widerstand darstellen kann.

Die Lösung der obengenannten Aufgabe und die Ermöglichung einer Lösung der zusätzlichen Forderungen erfolgt erfindungsgemäß dadurch, daß der Stift Teil eines aus Draht geformten Federelementes ist, das in den Steuerraum eingesetzt ist und dessen Ausbildung und Anordnung so ist, daß es sich mit einem ersten Längenabschnitt an der dem Steuerraum zugekehrten Seite des Differentialkolbens und mit einem zweiten, sich an den ersten anschließenden Längenabschnitt, an der dem Differentialkolben gegenüberliegenden Innenwand des Steuerraumes abstützt, während ein dritter, sich an den zweiten anschließender Längenabschnitt durch die Steuerbohrung hindurch in den Druckraum hineingeführt ist.

Vorteilhafte Ausführungsformen des erfindungsgemäßen Ventils sind in den Unteransprüchen beschrieben.

Der Grundgedanke der Erfindung besteht darin, den in die Steuerbohrung hineinragenden Stift als Teil eines Federelementes auszubilden, von dem ein Längenabschnitt durch die ganze Steuerbohrung hindurch, also vom Steuerraum in den Druckraum, hineingeführt ist. Ein solches Federelement läßt sich außerordentlich leicht herstellen und es müssen keine besonderen Maßnahmen getroffen werden, um beispielsweise wie bei bekannten Ventilen dieser Art, eine Stift am Gehäuse oder einen beweglichen Teil zu befestigen, was insbesondere bei Ventilen aus Kunststoff mit Schwierigkeiten verbunden ist.

Wie weiter unten anhand von Ausführungsbeispielen näher erläutert, ist die erfindungsgemäße Lösung nicht nur konstruktiv außerordentlich einfach zu verwirklichen, sondern ergibt auch einen hervorragenden Reinigungseffekt, da sich das die Steuerbohrung durchsetzende Teil des Federelementes ständig in dieser Bohrung befindet und bei jeder Bewegung des Differentialkolbens eine axiale und zusätzlich eine radiale Relativbewegung in dieser Steuerbohrung ausführt.

Mit dem erfindungsgemäßen Federelement ist es auch sehr leicht möglich, gleichzeitig die weitere obengenannte Forderung zu erfüllen, daß bei einer inversen Druckbeaufschlagung des Ventils kein Öffnen erfolgen soll. Hierzu braucht lediglich das Federelement, das sich sowohl am Differentialkolben als auch an der Innenwand des Steuerraumes abstützt, so ausgebildet und bemessen sein, daß eine zusätzliche Federkraft auf den Differentialkolben wirkt. Diese Gegendruckdichtigkeit kann beispielsweise auf einen Druck von 0,2 bis 0,5 bar ausgelegt sein.

Schließlich ist es mit der erfindungsgemäßen Anordnung auch möglich, die weitere Forderung zu erfüllen, daß das Medium in die Schutzmaßnahme Erdung mit einbezogen ist. Durch den durch die Steuerbohrung ganz hindurchgeführten Teil des metallischen Federelementes ist das im Steuerraum befindliche Medium metallisch mit dem im Druckraum befindliche Medium verbunden. Wenn also beispielsweise das elektromagnetisch betätigte Steuerventil, dessen den Steuerventilteller tragender Anker im allgemeinen in den Steuerraum hineingeführt ist, und mit ihm das Ventiloberteil elektrisch leitend mit dem Schutzleiter verbunden sind, ist auch das Medium im Steuerraum in diese Schutzmaßnahme einbezogen und die Schutzmaßnahme wird durch den durch die Steuerbohrung hindurchgeführten Teil des Federelementes auf das im Druckraum befindliche Medium ausgeweitet.

Im folgenden werden anhand der beigefügten Zeichnungen zwei Ausführungsbeispiele für ein eigenmediumgesteuertes Ventil nach der Erfindung näher erläutert.

In den Zeichnungen zeigen:

Fig. 1 in einer perspektivischen, teilweise geschnittenen Teildarstellung eine erste Ausführungsform eines eigenmediumgesteuerten Ventils mit elektromagnetisch betätigtem Steuerventil;

Fig. 2 in einer Darstellung analog Fig. 1 eine weitere Ausführungsform eines eigenmediumgesteuerten Ventils mit elektromagnetisch betätigtem Steuerventil.

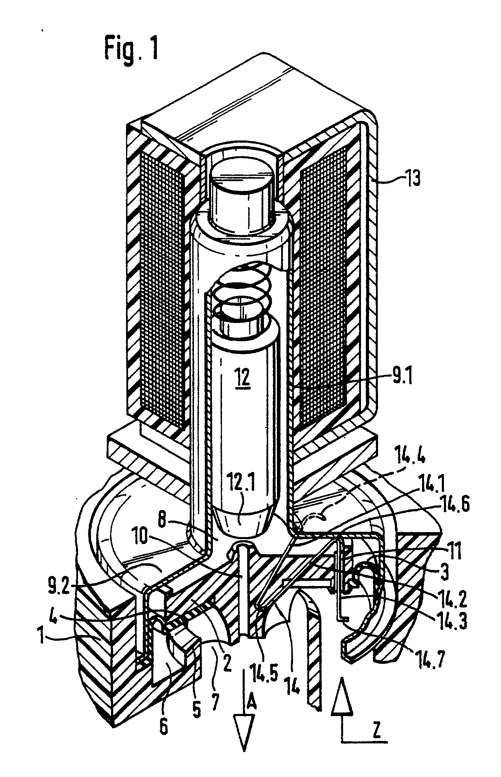

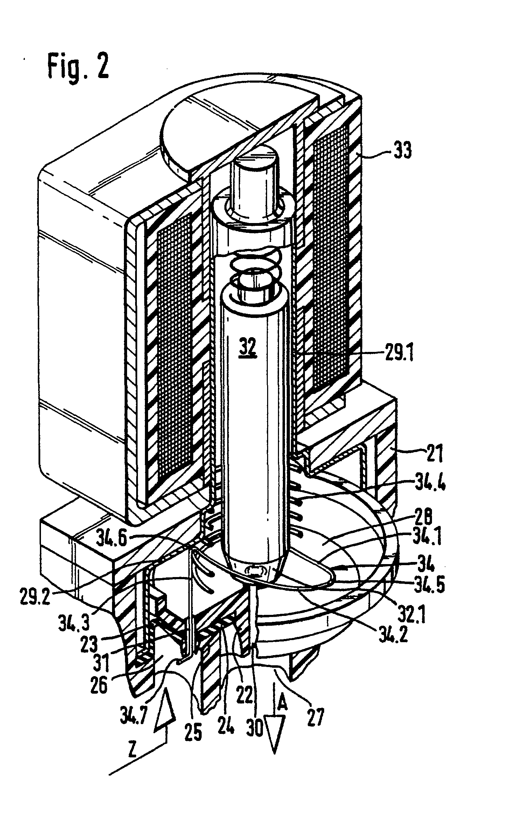

In den Fig. 1 und 2 sind nur die für die Steuerung wichtigen Teile eine servogesteuerten Ventils dargestellt.

Im nur angedeuteten Ventilgehäuse 1 ist ein Differentialkolben 2 in axialer Richtung verschiebbar angeordnet, der an seinen Rändern über eine Rollmembran 3 mit dem Ventilgehäuse verbunden ist. Der Differentialkolben 2 trägt an seiner Unterseite einen Ventilteller 4, der einem Ventilsitz 5 gegenüberliegt. Der Ventilzufluß Z, also der Druckanschluß, mündet in eine ringförmige Druckkammer 6, die über den Ventilsitz 5 mit einer zum Ventilauslaß A führenden Abflußkammer 7 verbunden ist.

In Fig. 1 oberhalb des Differentialkolbens 2 ist ein Steuerraum 8 angeordnet, der an seiner Unterseite durch die Oberfläche des Differentialkolbens 2 bzw. durch die Membran 3 begrenzt ist, während die anderen Begrenzungen durch die Innenflächen eines Führungsrohres gebildet werden, das ein verbreitertes Unterteil 9.2 und ein schmaleres Oberteil 9.1 besitzt, wobei in letzterem der Magnetanker 12 eines elektromagnetisch betätigten Steuerventils geführt ist, dessen Betätigungsteile insgesamt mit 13 bezeichnet sind.

Im Differentialkolben 2 befindet sich eine mittig angeordnete axiale Entlastungsbohrung 10, durch die der Steuerraum 8 mit dem Abflußraum 7 verbunden ist. Weiterhin weist der Differentialkolben 2 eine außermittig angeordnete axiale Steuerbohrung 11 auf, durch die der Steuerraum 8 mit dem Druckraum 6 verbunden ist. Der am unteren Ende des Magnetankers 12 angeordnete Steuerventilteller 12.1 liegt dem oberen Ende der Entlastungsbohrung 10 gegenüber und verschließt diese im Ruhezustand des Steuerventils.

Die an sich bekannte Funktionsweise dieses Ventils ist folgende:

Das durch den Ventilzufluß Z unter Druck zuströmende Medium gelangt über den Druckraum 6 und die Steuerbohrung 11 in den Steuerraum 8. Die Flächenverhältnisse am Differentialkolben sind so gewählt, daß bei durch das Steuerventil verschlossener Entlastungsbohrung 10 der Differentialkolben 2 unter dem Druch des Mediums im Steuerraum 8 nach unten bewegt und sich das Ventil durch Aufsetzen des Ventiltellers 4 auf den Ventilsitz 5 schließt.

Wird das Steuerventil erregt und durch Anziehen des Ankers 12 die Entlastungsbohrung 10 geöffnet, so tritt ein Druckausgleich zwischen dem Steuerraum 8 und dem Abflußraum 7 auf und der Differentialkolben 2 hebt sich aufgrund des im Druckraum 6 anstehenden Druckes, so daß sich das Ventil öffnet.

Es ist leicht ersichtlich, daß bei einer Verstopfung der Steuerbohrung 11 ein Zustand eintritt, indem das Ventil nicht mehr schließt, weil sich im Steuerraum 8 der hierzu notwendige Druck nicht aufbauen kann. Dies kann beispielsweise bei Ventilen, die in einem Waschautomat eingebaut sind, zu außerordentlich nachteiligen Folgen mit unkontrolliertem Wasseraustritt führen.

Um eine Verstopfung der Steuerbohrung 11, beispielsweise durch sich absetzende Verunreinigungen, ständig zu verhindern, ist bei dem in Fig. 1 dargestellten Ventil folgende einfache Einrichtung vorgesehen:

In den Steuerraum 8 ist ein insgesamt mit 14 bezeichnetes Federelement eingelegt, das folgendermaßen aufgebaut ist:

Es ist aus Federdraht mit rundem Querschnitt geformt und besitzt einen ersten, im wesentlichen gradlinigen Abschnitt 14.1, der auf der oberen Oberfläche des Differentialkolbens 2 aufliegt und sich an seinem freien Ende mit einer Umbiegung 14.4 im Randbereich des Differentialkolbens 2 abstützt, während sein anderes Ende über eine Umbiegung 14.5 sich ebenfalls im Randbereich abstützt, wobei sich an dieses Ende ein weiterer im wesentlichen gradliniger Abschnitt 14.2 anschließt, der schräg nach oben geführt ist und sich an der Innenfläche des breiteren Teils 9.2 des Führungsrohres, die dem Differentialkolben 2 gegenüberliegt, abstützt. An dieser Stelle befindet sich eine weitere Umbiegung 14.6 in Richtung nach unten auf den Differentialkolben 2 zu und es schließt sich ein dritter gradliniger Abschnitt 14.3 an, der durch die Steuerbohrung 11 hindurch und in den Druckraum 6 hineingeführt ist. Am freien Ende dieses dritten Längenabschnittes 14.3 befindet sich eine ha kenförmige rechtwinklige Umbiegung 14.7, die das Federelement unverlierbar macht.

Die Wirkungsweise dieses Federelementes ist aus Fig. 1 sofort ersichtlich. Bewegt sich der differentialkolben 2 auf und ab, so ergibt sich wegen der Abstützung der Umbiegung 14.6 am festen Gehäuse eine Relativbewegung zwischen dem dritten Längenabschnitt 14.3 und der Innenwand der Steuerbohrung 11. Dadurch, daß dieser Längenabschnitt 14.3 durch die gesamte Steuerbohrung 11 hindurchgeführt ist, wird der Querschnitt der Steuerbohrung 11 durch einen Ringspalt gebildet.

Dadurch, daß sich das Federelement 14 mit dem ersten Längenabschnitt 14.1 auf dem Differentialkolben 2 abstützt, ergibt sich außer der relativen Axialbewegung zwischen dem dritten Längenabschnitt 14.3 und der Steuerbohrung 11 eine Kippbewegung des Federelementes 14, die zu einer quasi radialen Bewegung des dritten Längenabschnittes 14.3 in einer senkrecht stehenden Ebene durch die Steuerbohrung 11 führt. Auf diese Weise wird der Ringspalt der Steuerbohrung 11 ständig zuverlässig von Fremdkörpern und anhaftenden Belägen gesäubert.

Weiterhin ist ersichtlich, daß auch bei dieser Ausführungsform bereits das Federelement 14 zwischen Differentialkolben 2 und dem festen Ventilgehäuse 1 der Öffnungsbewegung des Differentialkolbens 2 entgegenwirkt, so daß bei entsprechender Bemessung ein Öffnen bei inverser Druckbeaufschlagung verhindert werden kann. Schließlich ist auch leicht ersichtlich, daß durch das Federelement 14 das im Steuerraum 8 befindliche Medium metallisch leitend mit dem im Druckraum 6 befindlichen Medium verbunden ist.

Die in Fig. 2 dargestellte Ausführungsform eines eigenmediumgesteuerten Ventils mit elektromagnetisch betätigtem Steuerventil unterscheidet sich von der Ausführungsform nach Fig. 1 in erster Linie durch die Ausbildung des Federelementes.

Auch dieses Ventil weist ein Gehäuse 21 und einen auf dem Gehäuse angeordneten Magnetteil 33 des Steuerventils auf, dessen Magnetanker 32 im oberen Teil des Führungsrohres 29.1 geführt ist und von oben in den Steuerraum 28 ragt, wobei seine Unterseite den Steuerventilteller 32.1 trägt, welcher der Entlastungsbohrung 30 im Differentialkolben 22 gegenüberliegt. Unterhalb des Differentialkolbens 22 ist der ringförmige Druckraum 26 angeordnet, der mit dem Ventilzufluß Z direkt verbunden ist und über den Ventilsitz 25, dem der an der Unterseite des Differentialkolbens 22 angeordnete Ventilteller 24 gegenüberliegt, mit dem Abflußraum 27 verbindbar ist, der seinerseits an den Ventilauslaß A angeschlossen ist.

Außermittig ist im Differentialkolben 22 die Steuerbohrung 31 angeordnet, die den Steuerraum 28 mit dem Druckraum 26 verbindet. Der Differentialkolben 22 ist mit dem Ventilgehäuse über ein Rollmembran 23 verbunden.

Das Federelement 34 ist bei dieser Ausführungsform einstückig angeschlossen an eine Schraubendruckfeder 34.4, die den Magnetanker 32 umfassend, sich an einem Absatz des Führungsrohres 29.1 abstützt und mit ihrer unteren Endwindung auf dem Differentialkolben 22 aufsitzt. Diese Endwindung setzt sich fort in einem ersten Längenabschnitt 34.1 des Federelementes 34, der über einen gekrümmten Abschnitt 34.5 in einen zweiten ansteigenden Längenabschnitt 34.2 übergeht, der sich an seinem gekrümmten Ende 34.6 an der Innenwand des breiteren Teils 29.2 des Führungsrohres abstützt, an dieser Stelle nach unten umgebogen ist und mit dem dritten Längenabschnitt 34.3 durch die Steuerbohrung 31 hindurch in den Druckraum 26 hineingeführt ist, wo sich die hakenförmige Umbiegung 34.7 befindet.

Die Wirkungsweise des Federelementes 34 ist prinzipiell die gleiche wie die des Federelementes 14 bei der Ausführungsform nach Fig. 1.

Bei der Ausführungsform nach Fig. 2 ist in besonders sinnfälliger Weise durch die Verbindung des Federelementes 34 mit der Schraubendruckfeder 34.4 ein Gesamtelement geschaffen, das eine gute Abstützung des Differentialkolbens gegen Federkraft am Gehäuse zur Verhinderung eines Öffnens bei inversem Druckanschluß mit einer hervorragenden ständigen Reinigung der Steuerbohrung 31 verbindet. Auch die elektrische Verbindung des im Steuerraum 28 vorhandenen Mediums mit dem Medium im Druckraum 26 ist in der gleichen Weise sichergestellt wie bei der Ausführungsform nach Fig. 1.

## Patentansprüche

1. Eigenmediumgesteuertes, durch ein vorzugsweise elektromagnetisch betätigtes Steuerventil auslösbares Ventil, mit einem im Ventilgehäuse bewegbar angeordneten, den Ventilteller tragenden Differentialkolben (2, 22), an dessen einer Seite ein mit dem Ventilzufluß verbundener Druckraum (6, 26) angeordnet ist, der über einen, dem Ventilteller (4, 24) gegenüberliegenden Ventilsitz (5, 25) mit dem Ventilauslaß (A) verbunden ist und an dessen anderer Seite ein Steuerraum (8, 28) angeordnet ist, der über eine mittig im Differentialkolben angeordnete, durch den Steuerventilteller (12.1, 32.1) verschließbare Entlastungsbohrung (10, 30) mit dem Ventilauslaß und über eine außermittig im Differentialkolben angeordnete Steuerbohrung (11, 31) mit dem Druckraum verbundet ist, wobei in die Steuerbohrung ein mit dem Ventilgehäuse fest verbundener Stift hineinragt, dadurch gekennzeichnet, daß der Stift Teil eines aus Draht geformten Federelementes (14, 34) ist, das in den Steuerraum (2, 22)) eingesetzt ist und dessen Ausbildung und Anordnung so ist, daß es sich mit einem ersten Längenabschnitt (14.1, 34.1) an der dem Steuerraum zugekehrten Seite des Differentialkolbens (2, 22) und mit einem zweiten, sich an den ersten anschließenden Längenabschnitt (14.2, 34.2), an der dem Differentialkolben (8, 28) gegenüberliegenden Innenwand des Steuerraumes abstützt, während ein dritter, sich an den zweiten anschließender Längenabschnitt (14.3, 34.3) durch die Steuerbohrung (11, 31) hindurch in den Druckraum (6, 26) hineingeführt ist.

2. Ventil nach Anspruch 1, dadurch gekennzeichnet, daß der in den Druckraum (6, 26) hineinragende dritte Abschnitt (14.3, 34.3) des Federelementes (14, 34) an seinem äußersten Ende eine hakenförmige Umbiegung (14.7, 34.7) aufweist.

3. Ventil nach Anspruch 1 oder 2, dadurch gekennzeichnet, daß die drei Längenabschnitte (14.1-14.2-14.3) im wesentlichen geradlinig ausgebildet und durch gekrümmte Zwischenabschnitte (14.5-14.6) miteinander verbunden sind, derart, daß der este Längenabschnitt (14.1) auf der Oberfläche des Differentialkolbens (2) aufliegt, der zweite Längenabschnitt (14.2) unter einem Winkel zwischen der Oberfläche des Differentialkolbens (2) und der Innenfläche des Steuerraumes (8) verläuft und sich mit seinem Ende an dieser Innenfläche abstützt und der dritte Längenabschnitt (14.3) senkrecht zu dieser Innenfläche durch die Steuerbohrung (11) geführt ist.

4. Ventil nach einem der Ansprüche 1 bis 3, dadurch gekennzeichnet, daß der Federelement (34) Teil einer Schraubendruckfeder (34.4) ist, mittels der sich der Differentialkolben (22) am Ventilgehäuse abstützt und an deren sich am Differentialkolben (22) abstützender Endwindung es einstückig angeformt ist.

## Claims

1. Own-medium controlled valve releasable by means of a preferably electromagnetically actuated control valve, with a differential piston (2, 22) which is arranged movably in the valve housing and carries the valve disc and on one side of which is located a pressure space (6, 26) connected to the valve inflow and, via a valve seat (5, 25) located opposite the valve disc (4, 24), connected to the valve outlet (A) and on the other side of which is located a control space (8, 28) which is connected to the valve outlet via a relief bore (10, 30) arranged centrally in the differential piston and closable by means of the control-valve disc (12.1, 32.1) and to the pressure space via a control bore (11, 31) arranged off-centre in the differential piston, a pin connected firmly to the valve housing projecting into the control bore, characterized in that the pin is part of a spring element (14, 34) which is shaped from wire and is inserted into the control space (8, 28) and the design and arrangement of which are such that it is supported with a first length portion (14.1, 34.1) on that side of the differential piston (2, 22) facing the control space and with a second length portion (14.2, 34.2) adjoining the first on that inner wall of the control space located opposite the differential piston (2, 22), whilst a third length portion (14.3, 34.3) adjoining the second is guided through the control bore (11, 31) into the pressure space (6, 26).

2. Valve according to Claim 1, characterized in that the third portion (14.3, 34.3) of the spring element (14, 34) projecting into the pressure space (6, 26) has a hook-shaped bend (14.7, 34.7) at its outermost end.

3. Valve according to Claim 1 or 2, characterized in that the three length portions (14.1-14.2-14.3) are made essentially straight and are connected to one another by means of curved intermediate portions (14.5-14.6), in such a way that the first length portion (14.1) rests on the surface of the differential piston (2), the second length portion (14.2) extends at an angle between the surface of the differential piston (2) and the inner face of the control space (8) and is supported with its end on this inner face, and the third length portion (14.3) is guided through the control bore (11) perpendicularly relative to this inner face.

4. Valve according to one of Claims 1 to 3, characterized in that the spring element (34) is part of a helical compression spring (34.4), by means of which the differential piston (22) is supported on the valve housing and on whose end turn supported on the differential piston (22) it is formed in one piece.

## Revendications

1. Vanne commandée par le fluide intrinsèque, pouvant être déclenchée par un clapet pilote de préférence à électro-aimant, comportant un piston différentiel (2, 22) disposé de manière mobile dans le corps de la vanne et supportant le plateau de vanne, piston sur un côté duquel est disposée une chambre de compression (6, 26) reliée au flux d'arrivée par un siège de vanne (6, 26) placé face au plateau (4, 34), à l'échappement A, et duquel est disposé une chambre de régulation (8, 28) qui, par un trou de délestage (10, 30) obturable par le plateau (12.1, 32.1) du clapet pilote, disposé centralement dans le piston différentiel, est reliée à l'échappement de la vanne et par un trou de régulation (11, 31) disposé de manière excentrée dans le piston différentiel avec la chambre de compression, tandis qu'une tige reliée de façon rigide au corps de la vanne pénètre dans ledit trou de régulation, caractérisée par le fait que la tige fait partie d'un élément élastique (14, 34) réalisé en fil métallique qui est inséré dans la chambre de régulation (8, 28) et dont la conformation et la disposition sont telles qu'il s'appuie par un premier tronçon longitudinal (14.1, 34.1) sur la face du piston différentiel (2, 22) orienté à la chambre de régulation et par un deuxième tronçon longitudinal (14.2, 34.2) faisant suite au premier sur la paroi intérieure de la chambre de régulation faisant face au piston différentiel (2, 22), tandis qu'un troisième tronçon longitudinal (14.3, 34.3) raccordé au deuxième passe à travers le trou de régulation (11, 31) pour pénétrer dans la chambre de compression (6, 26).

2. Vanne selon la revendication 1 caractérisée par le fait que le troisième tronçon (14.3, 34.3) de l'élément élastique (14, 34) pénétrant dans la chambre de compression (6, 26) présente sur l'extrémité la plus externe un repli en forme de crochet (14.7, 34.7).

3. Vanne selon la revendication 1 ou 2 caractérisée par le fait que les trois tronçons longitudinaux (14.1, 14.2, 14.3) sont réalisés sensiblement en ligne droite et reliés les uns aux autres par des tronçons intermédiaires courbes (14.5, 14.6) de telle sorte que le premier tronçon longitudinal (14.1) s'appuie sur la surface du piston différentiel (2), le deuxième tronçon longitudinal (14.2) s'étend sous un certain angle entre la surface du piston différentiel (2) et la face interne de la chambre de régulation (8) et s'appuie par son extrémité sur cette face interne et que le troisième tronçon longitudinal (14.3) passe à travers le trou de régulation (11) perpendiculairement à cette face interne.

4. Vanne selon l'une des revendications 1 à 3 caractérisée par le fait que l'élément élastique (34) fait partie d'un ressort de compression hélicoïdal (34.4) au moyen duquel le piston différentiel (32) s'appuie sur le corps de vanne et à la spire terminale duquel, s'appuyant sur le piston différentiel (32), ledit élément élastique (34) est intégré par moulage.

Fig. 1

# Fig. 2